# EUROPÄISCHE PATENTSCHRIFT

(11) **EP 1 369 463 B1**
(45) Veröffentlichungstag und Bekanntmachung des Hinweises auf die Patenterteilung: **12.09.2007**
(21) Anmeldenummer: 03012629.6
(22) Anmeldetag: 03.06.2003
(51) Int. Cl.: C09J 133/00

(54) **Klebstoffzusammensetzung**
Adhesive composition
Composition d'adhésif

(30) Priorität: 06.06.2002 DE 10225237
(43) Veröffentlichungstag der Anmeldung: 10.12.2003
(73) Patentinhaber: UHU GmbH & Co. KG, 77815 Bühl (Baden) (DE)
(72) Erfinder: Werhahn, Wilhelm, 76534 Baden-Baden (DE); Liar, Aurelia, 77855 Achern (DE); Panter, Werner, 77855 Achern (DE)
(74) Vertreter: Jung Schirdewahn Grünberg Schneider

(56) Entgegenhaltungen:
- US-A- 4 997 861

## Beschreibung

Die Erfindung betrifft eine Klebstoffzusammensetzung mit verbesserter Klebefestigkeit, welche sowohl die Eigenschaften von Sekundenklebern als auch Allesklebern besitzt und daher in einem breiten Anwendungsbereich einsetzbar ist.

Klebstoffzusammensetzung auf Basis von Alkylcyanoacrylsäureester sind beispielsweise aus der DE 34 00 577 C2 bekannt. Der dort offenbarte Klebstoff enthält neben 2-Cyanacrylsäureester auch 4 bis 30 Gew.-% in dem 2-Cyanacrylsäureester gelöstes Vinylchlorid/Vinylacetat-Copolymer und zusätzlich nicht mehr als 25 Gew.-% Weichmacher. Aus WO 97/46630 ist ein Cyanacrylat-Klebstoff mit einem Esterzusatz bekannt, wobei der Cyanacrylat-Klebstoff Ethylester, Butylester und Methoxyethylester als Cyanacrylsäureester enthält.

Das kanadische Patent 1 326 928 offenbart eine Klebstoffzusammensetzung, umfassend 77 bis 95 Gew.-% monomeres 2-Ethoxyethyl-2-cyanoacrylat, ein Verdickungsmittel auf Basis von Poly-C₁₋₅-alkylacrylat oder -methacrylat sowie 2 bis 8 Gew.-% hydrophobe pyrogene Kieselsäure und 100 bis 1000 ppm eines Polymerisationsstabilisators. Obwohl diese Klebstoffzusammensetzung den herkömmlich verwendeten Ethyl-2-cyanacrylaten in Bezug auf Geruchsbildung, Sprödigkeit, Flexibilität und Einsatzfähigkeit für poröse Substrate überlegen ist und eine gute Wärmebeständigkeit und geringe Volatilität zeigt, besteht die Nachfrage, eine Klebstoffzusammensetzung zu schaffen, welche eine vergrößerte Klebefestigkeit bei Einsatz von weniger Klebekomponente und breiterem Anwendungsgebiet zeigt, wobei die Klebstoffzusammensetzung sowohl die Eigenschaften eines Sekundenklebers als auch eines Allesklebers besitzen soll.

Diese Aufgabe wird durch die im Anspruch 1 gekennzeichnete Klebstoffzusammensetzung gelöst.

Die Unteransprüche 2 bis 13 beschreiben vorteilhafte Ausgestaltungen dieser Klebstoffzusammensetzung gemäß Anspruch 1.

Anspruch 14 ist auf ein Verfahren zur Herstellung der Klebstoffzusammensetzung nach einem der Ansprüche 1 bis 14 gerichtet.

Die Erfindung betrifft daher eine Klebstoffzusammensetzung, gekennzeichnet durch
a) ≥ 50 Gew.-% monomeres 2-Alkoxy-alkyl-2-cyanacrylat;
b) 1 bis 15 Gew.-% Poly-(C₁₋₅)alkyl(meth)acrylat mit einem durchschnittlichen Molekulargewicht im Bereich von 10.000 bis 600.000,
c) 2 bis 10 Gew.-% hydrophobe pyrogene Kieselsäure,
d) 50 bis 10.000 ppm Polymerisationsstabilisator und
e) 200 bis 10.000 ppm Beschleuniger,
jeweils bezogen auf das Gesamtgewicht der Komponenten a) bis c).

Die Klebstoffzusammensetzung enthält als 2-Alkoxy-alkyl-2-cyanacrylat vorzugsweise 2-Ethoxy-ethyl-2-cyanacrylat, 2-Methoxy-ethyl-2-cyanacrylat, 2-Propoxy-ethyl-2-cyanacrylat und 2-Butoxy-ethyl-2-cyanacrylat.

Als Verdickungsmittel wird Poly-(C₁₋₅)-alkyl(meth)acrylat mit einem durchschnittlichen Molekulargewicht im Bereich von 10.000 bis 600.000 ausgewählt und insbesondere sind hierfür die von z.B. der Firma Degussa AG, Röhm GmbH, Wacker Chemie GmbH ausgelieferten aliphatischen Methacrylate und vernetzende Methacrylate sowie Polymethacrylate, wie Methylmethacrylat, Tetrahydrofurfurylmethacrylat, Ethylenglykoldimethacrylat, 1,4-Butandioldimethacrylat, Triethylenglykoldimethacrylat, 1,5-Hexandioldimethacrylat, 1,12-Dodecandioldimethacrylat, wie z.B. handelsübliches PLEXIDON M449, PLEXIDON M489, PLEXIDON M527, sowie Degalan LP 50/90, LP 70/09, LP 87/09 und Homo- und Copolymere von N-Butylmethacrylat und Methylmethacrylat, Copolymere von Vinylchlorid und Vinylacetat, Homo- und Copolymere von Vinylacetat, sowie Polyole, wie Dibenzylidensorbit, geeignet.

Vorzugsweise enthält die Klebstoffzusammensetzung 0 bis 10 Gew.-% Weichmacher, ausgewählt aus Isobutylphthalat, Glycerintriacetat/Triacetin und Citrofol B II/Acetyltributylcitrat und Cyclohexan-1,2-dicarbonsäure plus C-9-Alkohole.

Vorzugsweise ist das 2-Alkoxy-alkyl-2-cyanacrylat in einer Menge von 80 bis 90 Gew.-%, bezogen auf das Gesamtgewicht der Komponenten a) bis c), in der Klebstoffzusammensetzung enthalten.

Vorteilhafte Ergebnisse werden erzielt, wenn das Verdickungsmittel b) gemäß Anspruch 1 in einer Menge von 5 bis 10 Gew.-%, bezogen auf das Gesamtgewicht der Komponenten a) bis c), enthalten ist. Die hydrophobe pyrogene Kieselsäure (Komponente c)) ist in einer Menge von 2 bis 10 Gew.-%, bezogen auf das Gesamtgewicht der Komponenten a) bis c), enthalten.

Die als Verdickungsmittel ebenfalls eingesetzte hydrophobe pyrogene Kieselsäure besteht aus im Handel erhältlichen Produkten (Hersteller Wacker Chemie GmbH, Cabot Corporation, Degussa AG) und ist ausgewählt aus HDK H 15, H 20, H 30, H 2000, Aerosil R 802, R 805, R 812, R 812S, R 972, Cabosil TS-530, TS-610 und T-720.

Die Klebstoffzusammensetzung enthält einen Polymerisationsstabilisator, vorzugsweise zwei Stabilisatoren, die zum einen die Radikalpolymerisation und zum anderen die anionische Polymerisation unterdrücken. Diese sind ausgewählt aus Hydrochinon gegen die Radikalpolymerisation und aus p-Toluolsulfonsäureanhydrid, o-Sulfobenzoesäure-cycloanhydrid, Methansulfonsäure und Dimethylsulfit gegen die anionische Polymerisation. Vorzugsweise ist der Stabilisator gegen die Radikalpolymerisation in einer Menge von 100 bis 5.000 ppm und der Stabilisator gegen eine anionische Polymerisation in einer Menge von 50 bis 5.000 ppm, bezogen auf das Gesamtgewicht der Klebstoffkomponente a), und der Verdickungsmittel b), und c) enthalten.

Die Viskosität der erfindungsgemäßen Klebstoffzusammensetzung beträgt 0,5 dPas bis gelartig.

Zur Einstellung eines gewünschten Geruchs kann die Klebstoffzusammensetzung Parfum und/oder ein Lösemittel enthalten.

Als Beschleuniger werden vorteilhafterweise Kronenether eingesetzt, ausgewählt aus 12-Crown-4, Benzo-15-Crown-5, 15-Crown-5, 18-Crown-6, Dibenzo-18-Crown-6, Dibenzo-24-Crown-8 sowie Polyethylenglykoldimethylether, wie PEG 500, 600, 1000 und Calixaren-Derivate.

Die Erfindung betrifft auch ein Verfahren zur Herstellung dieser erfindungsgemäßen Klebstoffzusammensetzung, welches dadurch gekennzeichnet ist, dass in einem ersten Schritt der Polymerisationsstabilisator zu dem Monomeren 2-Alkoxy-alkyl-2-cyanacrylat unter Rühren zugegeben, und anschließend der Beschleuniger und danach das getrocknete, peroxid- freie Polyalkylmethacrylat zugegeben wird, nachdem die Mischung auf nicht mehr als 80°C erhitzt und anschließend unter beständigem Rühren auf Raumtemperatur abgekühlt wurde, und in einem zweiten Schritt die hydrophobe pyrogene Kieselsäure zu der abgekühlten Mischung unter kurzem Rühren zugegeben wird.

Die erfindungsgemäße Klebstoffzusammensetzung ist für poröse und glatte Materialien, inklusive Glas, Papier, Styropor, weiches Leder gleichermaßen geeignet und kann in Abhängigkeit von der Viskositialeinstellung sowohl vertikal als auch horizontal angewandt werden, ohne zu tropfen. Des weiteren ist die erfindungsgemäße Klebstoffzusammensetzung sowohl für die Verklebung von kleinen und großen Flächen geeignet und besitzt eine "offene Zeit", innerhalb welcher die Klebeflächen nachkorrigierbar sind. Die Abbindezeiten sind reduziert und die Haftung an der Haut ist vermindert. Im Vergleich zu herkömmlichen Klebstoffzusammensetzungen erfolgt mit der erfindungsgemäßen Klebstoffzusammensetzung in Abhängigkeit von der Viskositialeinstellung kein Durchschlagen auf dem Papier und die Zusammensetzung besitzt eine gute Temperaturbeständigkeit und gute UV-Beständigkeit.

Die folgende Tabelle zeigt die überlegene Anzugsgeschwindigkeit und Anfangshaftung der erfindungsgemäßen Klebstoffzusammensetzung im Vergleich zu einer Klebstoffzusammensetzung gemäß kanadischem Patent 1 326 928.

**Anzugsgeschwindigkeit (Teile nicht mehr gegeneinander verschiebbar)**

| | **PVC** [s] | **ABS** [s] | **Buche** [s] |
|---|---|---|---|
| Kanadisches Patent 1 326 928 ca. 90% 2-Ethoxy-ethyl-2-cyanacrylat | 150 | 120 | >300 |
| erfindungsgemäß ca. 90% 2-Ethoxy-ethyl-2-cyanacrylat + Komp. nach Anspruch 1 | 45 | 35 | 80 |
| erfindungsgemäß ca. 90% 2-Methoxy-ethyl-2-cyanacrylat + Komp. nach Anspruch 1 | 30 | 25 | 45 |

**Anfangshaftung (nicht mehr gegeneinander verschiebbar, Zeit, bis man einen messbaren Widerstand gegen Verschieben bemerkt)**

| | **PVC** [s] | **ABS** [s] | **Buche** [s] |
|---|---|---|---|
| Kanadisches Patent 1 326 928 ca. 90% 2-Ethoxy-ethyl-2-cyanacrylat | 25 | 20 | 300 |
| erfindungsgemäß ca. 90% 2-Ethoxy-ethyl-2-cyanacrylat + Komp. nach Anspruch 1 | 15 | 10 | 30 |
| erfindungsgemäß ca. 90% 2-Methoxy-ethyl-2-cyanacrylat + Komp. nach Anspruch 1 | 10 | 15 | 20 |

## Patentansprüche

1. Klebstoffzusammensetzung, gezeichnet durch:
a) ≥ 50 Gew.-% monomeres 2-Alkoxy-alkyl-2-cyanacrylat;
b) 1 bis 15 Gew.-% Poly-(C₁₋₅)alkyl(meth)acrylat mit einem durchschnittlichen Molekulargewicht im Bereich von 10.000 bis 600.000,
c) 2 bis 10 Gew.-% hydrophobe pyrogene Kieselsäure,
d) 50 bis 10.000 ppm Polymerisationsstabilisator und
e) 200 bis 10.000 ppm Beschleuniger,
jeweils bezogen auf das Gesamtgewicht der Komponenten a) bis c).

2. Klebstoffzusammensetzung nach Anspruch 1, **dadurch gekennzeichnet, dass** die Monomeren 2-Alkoxy-alkyl-2-cyanacrylate ausgewählt sind aus 2-Methoxy-ethyl-2-cyanacrylat, 2-Ethoxy-ethyl-2-cyanacrylat, 2-Butoxy-butyl-2-cyanacrylat und 2-propyl-butyl-2-cyanacrylat.

3. Klebstoffzusammensetzung nach Anspruch 1 oder 2, **dadurch gekennzeichnet, dass** sie weiterhin 0 bis 10 Gew.-% Weichmacher, ausgewählt aus Isobutylphthalat, Glycerintriacetat/Triacetin, Citrofol B II/Acetyltributylcitrat und Cyclohexan-1,2-dicarbonsäure plus C-9-Alkohole enthält.

4. Klebstoffzusammensetzung nach einem der Ansprüche 1 bis 3, worin die Komponente a) in einer Menge von 80 bis 90 Gew.-%, bezogen auf das Gesamtgewicht der Komponenten a) bis c), enthalten ist.

5. Klebstoffzusammensetzung nach einem der Ansprüche 1 bis 4, **dadurch gekennzeichnet, dass** die Komponente b) in einer Menge von 5 bis 10 Gew.-%, bezogen auf das Gesamtgewicht der Komponenten a) bis c), enthalten ist.

6. Klebstoffzusammensetzung nach einem der Ansprüche 1 bis 5, **dadurch gekennzeichnet, dass** die Komponente b) ausgewählt ist aus Polyethyl(meth)acrylat, Polymethyl(meth)acrylat und aus Homo- und Copolymeren von N-Butylmethacrylat und Methylmethacrylat, Copolymeren von Vinylchlorid und Vinylacetat, Homo- und Copolymeren von Vinylacetat, sowie Polyolen, wie Dibenzylidensorbit.

7. Klebstoffzusammensetzung nach einem der Ansprüche 1 bis 6, **dadurch gekennzeichnet, dass** die hydrophobe pyrogene Kieselsäure ausgewählt ist aus HDK H 15, H 20, H 30, H 2000, Aerosil R 802, R 805, R 812, R 812S, R 972, Cabosil TS-530, TS-610, T-720.

8. Klebstoffzusammensetzung nach einem der Ansprüche 1 bis 7, **dadurch gekennzeichnet, dass** der Polymerisationsstabilisator ausgewählt ist aus einem Stabilisator gegen Radikalpolymerisation und einem Stabilisator gegen anionische Polymerisation.

9. Klebstoffzusammensetzung nach Anspruch 7, **dadurch gekennzeichnet, dass** der Stabilisator gegen Radikalpolymerisation Hydrochinon ist und der Stabilisator gegen anionische Polymerisation ausgewählt ist aus p-Toluolsulfonsäureanhydrid, o-Sulfobenzoesäure-cycloanhydrid, Methansulfonsäure und Dimethylsulfit.

10. Klebstoffzusammensetzung nach Anspruch 8, **dadurch gekennzeichnet, dass** der Stabilisator gegen Radikalpolymerisation in einer Menge von 100 bis 5000 ppm und der Stabilisator gegen anionische Polymerisation in einer Menge von 50 bis 5000 ppm, bezogen auf das Gesamtgewicht der Komponenten a) bis c), enthalten ist.

11. Klebstoffzusammensetzung nach einem der Ansprüche 1 bis 10, **gekennzeichnet durch** eine Viskosität von 0,5 dPas bis gelartig.

12. Klebstoffzusammensetzung nach einem der Ansprüche 1 bis 11, **dadurch gekennzeichnet, dass** die Zusammensetzung weiterhin ein Parfüm und/oder ein Lösungsmittel enthält.

13. Klebstoffzusammensetzung nach einem der Ansprüche 1 bis 12, **dadurch gekennzeichnet, dass** die Beschleuniger ausgewählt sind aus Kronenethern, wie 12-Crown-4, Benzo-15-Crown-5, 15-Crown-5, 18-Crown-6, Dibenzo-18-Crown-6, Dibenzo-24-Crown-8 und Polyethylenglykoldimethylethern, wie PEG 500, 600, 1000 und Calixaren-Derivaten.

14. Verfahren zur Herstellung der Klebstoffzusammensetzung nach einem der Ansprüche 1 bis 13, **dadurch gekennzeichnet, dass** in einem ersten Schritt der Polymerisationsstabilisator zu dem monomeren 2-Alkoxy-alkyl-2-cyanacrylat unter Rühren und anschließend der Beschleuniger zugegeben wird, und danach das getrocknete, peroxidfreie Polyalkylmethacrylat zugegeben wird, nachdem die Mischung auf nicht mehr als 80°C erhitzt und anschließend unter beständigem Rühren auf Raumtemperatur abgekühlt wurde, und in einem zweiten Schritt die hydrophobe pyrogene Kieselsäure zu der abgekühlten Mischung unter kurzem Rühren zugegeben wird.

## Claims

1. Adhesive composition, **characterised by**:
a) ≥ 50% by weight of monomeric 2-alkoxyalkyl 2-cyanoacrylate,
b) 1 to 15% by weight of poly(C₁₋₅)alkyl (meth)acrylate having an average molecular weight in the range from 10,000 to 600,000,
c) 2 to 10% by weight of hydrophobic pyrogenic silicic acid,
d) 50 to 10,000 ppm of polymerisation stabiliser and
e) 200 to 10,000 ppm of accelerator,
in each case based on the total weight of components a) to c).

2. Adhesive composition according to Claim 1, **characterised in that** the monomeric 2-alkoxyalkyl 2-cyanoacrylates are selected from 2-methoxyethyl 2-cyanoacrylate, 2-ethoxyethyl 2-cyanoacrylate, 2-butoxybutyl 2-cyanoacrylate and 2-propylbutyl 2-cyanoacrylate.

3. Adhesive composition according to Claim 1 or 2, **characterised in that** it furthermore comprises 0 to 10% by weight of plasticisers, selected from isobutyl phthalate, glycerol triacetate/triacetin, Citrofol B II/acetyltributyl citrate and cyclohexane-1,2-dicarboxylic acid plus C-9 alcohols.

4. Adhesive composition according to one of Claims 1 to 3, in which component a) is present in an amount of 80 to 90% by weight, based on the total weight of components a) to c).

5. Adhesive composition according to one of Claims 1 to 4, **characterised in that** component b) is present in an amount of 5 to 10% by weight, based on the total weight of components a) to c).

6. Adhesive composition according to one of Claims 1 to 5, **characterised in that** component b) is selected from polyethyl (meth)acrylate, polymethyl (meth)acrylate and from homo- and copolymers of N-butyl methacrylate and methyl methacrylate, copolymers of vinyl chloride and vinyl acetate, homo- and copolymers of vinyl acetate, and polyols, such as dibenzylidenesorbitol.

7. Adhesive composition according to one of Claims 1 to 6, **characterised in that** the hydrophobic pyrogenic silicic acid is selected from HDK H 15, H 20, H 30, H 2000, Aerosil R 802, R 805, R 812, R 812S, R 972, Cabosil TS-530, TS-610, T-720.

8. Adhesive composition according to one of Claims 1 to 7, **characterised in that** the polymerisation stabiliser is selected from a stabiliser against free-radical polymerisation and a stabiliser against anionic polymerisation.

9. Adhesive composition according to Claim 7, **characterised in that** the stabiliser against free-radical polymerisation is hydroquinone and the stabiliser against anionic polymerisation is selected from p-toluenesulphonic anhydride, o-sulphobenzoic cycloanhydride, methanesulphonic acid and dimethyl sulphite.

10. Adhesive composition according to Claim 8, **characterised in that** the stabiliser against free-radical polymerisation is present in an amount of 100 to 5000 ppm and the stabiliser against anionic polymerisation is present in an amount of 50 to 5000 ppm, based on the total weight of components a) to c).

11. Adhesive composition according to one of Claims 1 to 10, **characterised by** a viscosity of 0.5 dPas to gelatinous.

12. Adhesive composition according to one of Claims 1 to 11, **characterised in that** the composition furthermore comprises a perfume and/or a solvent.

13. Adhesive composition according to one of Claims 1 to 12, **characterised in that** the accelerators are selected from crown ethers, such as 12-crown-4, benzo-15-crown-5, 15-crown-5, 18-crown-6, dibenzo-18-crown-6, dibenzo-24-crown-8, and polyethylene glycol dimethyl ethers, such as PEG 500, 600, 1000, and calixarene derivatives.

14. Process for the preparation of the adhesive composition according to one of Claims 1 to 13, **characterised in that**, in a first step, the polymerisation stabiliser is added to the monomeric 2-alkoxyalkyl 2-cyanoacrylate with stirring, and the accelerator is subsequently added, and the dried, peroxide-free polyalkyl methacrylate is then added after the mixture has been heated to not more than 80°C and subsequently cooled to room temperature with constant stirring, and, in a second step, the hydrophobic pyrogenic silicic acid is added to the cooled mixture with brief stirring.

## Revendications

1. Composition d'adhésif, **caractérisée par** :
a) ≥ 50 % que 2-alcoxy-alkyl-2-cyanacrylate ;
b) de 1 à 15% en poids de polyalkyl(méth)acrylate (C_{1 à 5}) ayant un poids moléculaire moyen dans la fourchette de 10.000 à 600.000,
c) de 2 à 10 % poids d'acide silicique pyrogène hydrophobe,
d) de 50 à 10.000 ppm de stabilisateur de polymérisation, et
e) de 200 à 10.000 ppm d'accélérateur,
se référant chaque fois au mélange global des composants a) à c).

2. Composition d'adhésif selon la revendication 1, **caractérisée en ce que** les 2-alcoxy-alkyl-2-cyanacrylate monomères sont sélectionnés parmi 2-méthoxy-éthyl-2-cyanacrylate, 2-éthoxy-éthyl-2-cyanacrylate, 2-butoxy-butyl-2-cyanacrylate et 2-propyl-butyl-2-cyanacrylate.

3. Composition d'adhésif selon la revendication 1 ou 2, **caractérisée en ce qu'**elle contient en outre de 0 à 10 % en poids de plastifiant, sélectionné parmi isobutylphtalate, glycérine-triacétate/triacétine, Citrofol BII/acétyltributylcitrate et cyclohexane-1,2-diacide carboxylique, plus des alcools en C-9.

4. Composition d'adhésif selon l'une des revendications 1 à 3, dans laquelle le composant a) est contenu en une quantité de 80 à 90 % en poids, en se référant au poids total des composants a) à c).

5. Composition d'adhésif selon l'une des revendications 1 à 4, **caractérisée en ce que** le composant b) est contenu en une quantité de 5 à 10 % en poids, en se référant au poids total des composants a) à c).

6. Composition d'adhésif selon l'une des revendications 1 à 5, **caractérisé en ce que** le composant b) est sélectionné parmi polyéthyl(méth)acrylate, polyméthyl(méth)acrylate et d'homo- et copolymères de N-butylméthacrylate et méthylméthacrylate, des copolymères de chlorure de vinyle et d'acétate de vinyle, des homo- et copolymères d'acétate de vinyle, ainsi que du polyolène tel que la dibenzylidènesorbite.

7. Composition d'adhésif selon l'une des revendications 1 à 6, **caractérisée en ce que** l'acide silicique pyrogène hydrophobe est sélectionné parmi HDK H 15, H 20, H 30, H 2000, aérosil R 802, R 805, R 812, R 812S, R 972, Cabosil TS-530, TS-610, T-720.

8. Composition d'adhésif selon l'une des revendications 1 à 7, **caractérisée en ce que** le stabilisateur de polymérisation est sélectionné parmi un stabilisateur de polymérisation des radicaux et un stabilisateur de polymérisation anionique.

9. Composition d'adhésif selon la revendication 7, **caractérisé en ce que** le stabilisateur de polymérisation des radicaux est de l'hydroquinone et le stabilisateur de polymérisation anionique est sélectionné parmi l'anydride d'acide p-toluène sulfonique, cycloanydride d'acide o-sulfobenzoïque, acide méthane sulfonique et diméthylsulfite.

10. Composition d'adhésif selon la revendication 8, **caractérisé en ce que en ce que** le stabilisateur de polymérisation des radicaux est contenu en une quantité de 100 à 5.000 ppm et le stabilisateur de polymérisation anionique est contenu en une quantité de 50 à 5.000 ppm, en se référant au poids total des composants a) à c).

11. Composition d'adhésif selon l'une des revendications 1 à 10, **caractérisée par** une viscosité allant de 0,5 dPas jusqu'à un état de gel.

12. Composition d'adhésif selon l'une des revendications 1 à 11, **caractérisée en ce que** la composition contient en outre un parfum et/ou un solvant.

13. Composition d'adhésif selon l'une des revendications 1 à 12, **caractérisée en ce que** l'accélérateur est sélectionné parmi les éthers à couronne, tels que 12-crown-4, benzo-15-crown-5, 15-crown-5, 18-crown-6, dibenzo-18-crown-6, dibenzo-24-crown-8 et les polyéthylèneglykoldiméthyléthers, tels que PEG 500, 600, 1000 et les dérivés calixare.

14. Procédé de fabrication de composition d'adhésif selon l'une des revendications 1 à 13, **caractérisée en ce que**, lors d'une première étape, le stabilisateur de polymérisation est ajouté au 2-alcoxy-alkyl-2-cyanacrylate monomère avec agitation et, ensuite, est ajouté l'accélérateur et, ensuite, est ajouté le polyalkylméthacrylate, exempt de peroxyde, séché, après avoir chauffé le mélange à une température non supérieure à 80°C, et, ensuite, l'avoir refroidi à la température ambiante en agitant en permanence, et, lors d'une deuxième étape, l'acide silicique pyrogène hydrophobe est ajouté au mélange refroidi en agitant brièvement.
